Europäisches Patentamt

European Patent Office

Office européen des brevets

(11) Numéro de publication: **0 264 331 B1**

# FASCICULE DE BREVET EUROPEEN

(45) Date de publication de fascicule du brevet: **25.11.92**  (51) Int. Cl.5: **G01S 13/86**, G01S 17/74

(21) Numéro de dépôt: **87402258.5**

(22) Date de dépôt: **09.10.87**

(54) **Procédé d'identification IFF de champ de bataille, et système IFF de mise en oeuvre.**

(30) Priorité: **15.10.86 FR 8614297**

(43) Date de publication de la demande:
**20.04.88 Bulletin 88/16**

(45) Mention de la délivrance du brevet:
**25.11.92 Bulletin 92/48**

(84) Etats contractants désignés:
**BE DE FR GB IT**

(56) Documents cités:
DE-A- 2 215 463      DE-A- 2 223 633
DE-A- 2 251 295      DE-A- 3 113 154
US-A- 3 076 961      US-A- 3 802 780
US-A- 4 361 911

(73) Titulaire: **LMT RADIO PROFESSIONNELLE
46-47, Ouai Alphonse Le Gallo
F-92103 Boulogne-Billancourt(FR)**

(72) Inventeur: **Joguet, Jean-Claude
THOMSON-CSF SCPI
F-92045 PARIS LA DEFENSE CEDEX 67(FR)**

(74) Mandataire: **Chaverneff, Vladimir et al
THOMSON-CSF SCPI
F-92045 PARIS LA DEFENSE CEDEX 67(FR)**

# Description

La présente invention se rapporte à un procédé d'identification de champ de bataille, ainsi qu'à un système de mise en oeuvre de ce procédé.

Las systèmes IFF utilisés actuellement, du type question-réponse, présentent l'inconvénient d'être compliqués du fait qu'ils comportent des émetteurs-récepteurs à la fois du côté interrogateur et du côté répondeur et doivent en outre comporter des moyens permettant d'associer des cibles détectées par un senseur primaire à des cibles identifiées.

On connaît d'après le document DE-A-2223 633 un système de localisation de navires d'une escadre par le navire amiral, mais ce système en particulier du fait qu'il ne code pas les interrogations, ne permet pas d'assurer une grande confidentialité des échanges d'information entre interrogateur et interrogé.

La présente invention a pour objet un procédé d'identification IFF de champ de bataille qui permette d'établir une corrélation immédiate entre la détection et l'identification des cibles, et ce, avec le minimum de risques d'intrusion.

La présente invention a également pour objet un système d'identification IFF de champ de bataille qui soit plus simple et moins onéreux que les systèmes connus.

La procédé d'identification IFF de champ de bataille conforme à l'invention consiste à émettre, dès que l'on détecte un véhicule dans une zone surveillée à l'aide d'une caméra infrarouge, au moins une interrogation codée IFF vers ce véhicule, et à faire émettre par ce véhicule, si c'est un véhicule ami, dès qu'il reçoit l'interrogation, une impulsion laser infrarouge vers l'interrogateur, qui est reçue par la caméra infra-rouge.

Selon un aspect avantageux du procédé de l'invention, pour éviter des tentatives d'intrusion, l'interrogateur émet également des codes de non-réponses auxquels chaque véhicule ami ne doit pas répondre. Le système IFF de champs de bataille conforme à l'invention comporte un interrogateur IFF dont le transducteur d'émission, mobile en rotation, est mécaniquement couplé à une caméra de réception infra-rouge reliée à un dispositif de visualisation, et ce système comporte, sur chaque véhicule ami un transducteur de réception coopérant avec ledit transducteur d'émission, ce transducteur de réception étant relié à un récepteur IFF dont la sortie du décodeur de signaux IFF est reliée à une entrée de déclenchement d'impulsion laser d'une source laser infra-rouge dont l'émetteur est orienté dans la même direction que ledit transducteur de réception.

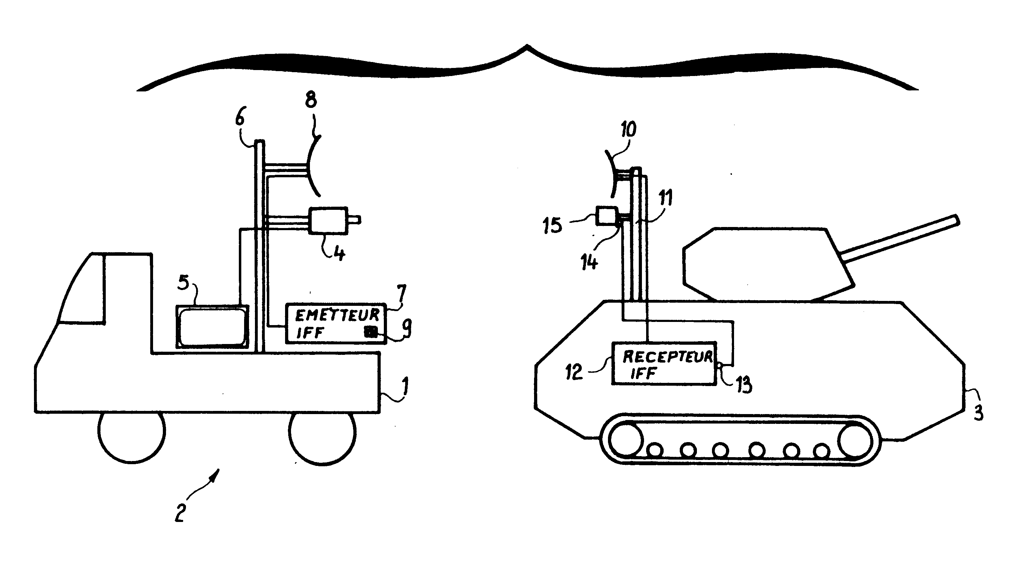

La présente invention sera mieux comprise à la lecture de la description détaillée d'un mode de réalisation pris à titre d'exemple non limitatif et illustré par le dessin annexé dont la figure unique est un bloc-diagramme simplifié d'un système conforme à l'invention.

Pour simplifier le dessin on n'a représenté, outre le véhicule 1 de la station interrogatrice 2, qu'un seul véhicule "ami" 3, mais il est bien entendu que le système de l'invention s'applique à un nombre quelconque de véhicules amis, les véhicules "ennemis" n'étant pas représentés.

La station interrogatrice 1 comporte un dispositif de surveillance infra-rouge classique se composant essentiellement d'une caméra infra-rouge 4 et d'un dispositif de visualisation 5 tel qu'un moniteur de télévision. La caméra 4 est fixée sur un mât rotatif 6 sensiblement vertical, de façon à pouvoir explorer une certaine zone de terrain du champ de bataille. Le mât 6 peut tourner autour de son axe soit continuellement dans le même sens en balayant donc un angle de 360°, soit en balayant un angle de quelques dizaines de degrés alternativement dans un sens et dans l'autre.

La station 1 comporte en outre un émetteur 7 d'interrogations codées IFF relié à un transducteur d'émission directif 8 qui est fixé sur la mât 6 et orienté dans la même direction que la caméra 4. Dans l'exemple représenté, l'émetteur 7 fonctionne dans les bandes de fréquences radar, de préférence en bande X ou Ku, et le transducteur 8 est donc alors une antenne de type radar de caractéristiques appropriées. Toutefois, l'invention n'est pas limitée à un tel domaine de longueurs d'ondes, et l'on peut par exemple utiliser une émission laser pour envoyer le code IFF, le transducteur 8 étant alors un émetteur laser. L'émetteur 7 comporte en particulier un bouton 9 que l'opérateur de la station 1 manoeuvre chaque fois qu'il désire envoyer un code IFF.

Le véhicule ami 3 comporte un transducteur de réception directif 10 fixé sur un mât 11 sensiblement vertical, ce transducteur étant convenablement dirigé pour pouvoir recevoir les émissions de la station 1. De façon avantageuse, le mât 11 est rotatif et tourne sur 360°. Dans l'exemple illustré, le transducteur 10 est une antenne de type radar pouvant recevoir les ondes émises par l'antenne 8. Dans le cas, mentionné ci-dessus, d'une émission d'interrogation laser, le transducteur 10 serait un dispositif photosensible de type approprié à la longueur d'onde laser à recevoir.

Le transducteur 10 est relié à un récepteur IFF 12 dont la sortie 13 de détection de code IFF est reliée à l'entrée de déclenchement 14 d'une source laser 15, de longueur d'onde pouvant être reçue par la caméra 4. Cette source 15 étant fixée sur le mât 11. L'émetteur de la source 15 est orienté dans la même direction que le transducteur 10.

De préférence, le signal émis par l'émetteur 7 est étalé en spectre, afin de diminuer les risques de repérage par l'ennemi. La récurrence du signal d'interrogation IFF est avantageusement d'environ 1KHz. Dans le cas où le transducteur 8 peut produire des lobes secondaires (cas d'une antenne radar classique), on fait émettre par l'émetteur 7, de façon connue en soi, un signal de suppression de lobes secondaires (signal "SLS"), rayonné par une antenne annexe non représentée), et couvrant les lobes secondaires de l'antenne 8.

A la réception de chaque interrogation amie (émise par la station 1), le récepteur 12 du véhicule 3 la décode et déclenche aussitôt, en réponse, la source laser 15. Bien entendu, le transducteur 10 étant directif, il ne peut recevoir d'interrogation que lorsque son lobe de réception est orienté dans la direction de la station 1.

Bien entendu également, la réception éventuelle par le transducteur 10 d'un signal SLS de niveau supérieur à celui du signal d'interrogation inhibe, de façon connue en soi, le déclenchement de la source 15.

L'opérateur de la station 1, qui surveille le terrain sur l'écran du dispositif de visualisation 5 relié à la caméra infra-rouge 4, appuie sur le bouton 9 dès qu'il détecte des véhicules. La manoeuvre du bouton 9 fait émettre par l'émetteur 7 une rafale d'interrogations codées IFF vers la zone surveillée. Les véhicules amis équipés d'un dispositif IFF conforme à l'invention déclenchent automatiquement leur source laser 15 à chaque passage du lobe de réception de leur antenne 10 tournante dans la direction de la station 1, et ce, tant que des interrogations IFF sont reçues. L'opérateur de la station 1 perçoit alors des points lumineux clignotants en provenance des véhicules amis sur son écran pendant tout le temps qu'il interroge. Bien entendu, l'opérateur doit vérifier que ces points lumineux s'éteignent dès qu'il cesse d'interroger.

De façon avantageuse, l'émetteur 7 peut également émettre, soit systématiquement en alternance avec le code d'interrogation IFF, soit à la demande de l'opérateur, un code de "non-réponse", c'est-à-dire un code, différent du vrai code IFF de la station 1 mais ressemblant, en première analyse, à un code d'interrogation IFF. Aucun véhicule ami ne doit répondre à un tel code de non-réponse, puisque le récepteur 12 de chacun de ces véhicules ne déclenche la source 15 que lorsqu'il reçoit le vrai signal d'interrogation IFF. Par contre, l'opérateur d'un véhicule ennemi, ne connaissant pas par hypothèse le vrai signal d'interrogation, pourrait remarquer qu'un véhicule ami de la station 1 émet une réponse laser à un signal d'interrogation IFF, sans toutefois avoir le temps ou la possibilité de pouvoir décrypter ce signal, et pourrait donc, à son tour, émettre une impuls ion laser à chaque signal ressemblant à une interrogation IFF, même s'il s'agit d'un code de non-réponse. On diminue ainsi les risques de tentatives d'intrusion de l'ennemi.

Ainsi, le système IFF conforme à l'invention ne nécessite, dans la station interrogatrice, qu'un émetteur, le récepteur de la réponse étant simplement la caméra infra-rouge de surveillance dont dispose généralement déjà une telle station et grâce à l'émission d'impulsions laser par tout véhicule ami équipé en réponse aux interro gations, l'opérateur de la station établit une corrélation immédiate entre la détection et l'identification des véhicules qui l'entourent.

Le système IFF de l'invention est protégé contre les brouillages d'une part grâce à l'étalement en spectre du signal d'interrogation, et d'autre part grâce au fait que le récepteur du signal de réponse est la caméra de surveillance elle-même : l'émission de signaux d'interrogation peut donc n'avoir lieu que lorsqu'il y a eu détection de véhicules. Ce système est également protégé contre l'exploitation par l'adversaire grâce au codage du signal d'interrogation et à l'éission de codes de non-réponse, ainsi que grâce à l'étalement en spectre du signal d'interrogation, ce qui entraîne une faible probabilité d'interception. En outre, du fait que la réponse des véhicules amis n'est emise que vers la station interrogatrice, il y a moins de risques qu'elle soit captée par l'adversaire que dans le cas où elle serait omnidirectionnelle, car on peut généralement supposer que les moyens d'observation de l'adversaire sont placés dans une direction différente de celle dans laquelle se propage la réponse.

## Revendications

1. Procédé d'identification IFF de champ de bataille, caractérisé par le fait que dès que l'on détecte un véhicule dans une zone surveillée à l'aide d'une caméra infra-rouge, on émet au moins une interrogation codée IFF vers ce véhicule, et que l'on fait émettre par ce véhicule, si c'est un véhicule ami, dès qu'il reçoit l'interrogation, une impulsion laser infra-rouge vers l'interrogateur, qui est reçue par ladite caméra infra-rouge.

2. Procédé selon la revendication 1, caractérisé par le fait que l'interrogateur émet également des codes de non-réponse auxquels tout véhicule ami interrogé ne doit pas répondre.

3. Procédé selon l'une des revendications 1 ou 2, caractérisé par le fait que l'interrogation est émise en bande X.

4. Procédé selon l'une des revendications 1 ou 2, caractérisé par le fait que l'interrogation est émise en bande Ku.

5. Procédé selon l'une des revendications 1 ou 2, caractérisé par le fait que l'interrogation est émise par un émetteur laser.

6. Procédé selon l'une des revendications 1 à 4, caractérisé par le fait que le signal d'interrogation est étalé en spectre.

7. Système d'interrogation IFF de champ de bataille comportant un interrogateur IFF (7) dont le transducteur d'émission (8), mobile en rotation, est mécaniquement couplé à une caméra de réception infra-rouge (4) reliée à un dispositif de visualisation (5), comportant aussi sur chaque véhicule ami (3), un transducteur de réception (10) coopérant avec ledit transducteur d'émission, caractérisé par le fait que ce transducteur de réception est relié à un récepteur IFF (12) dont la sortie du décodeur de signaux IFF (13) est reliée à une entrée (14) de déclenchement d'impulsion laser d'une source laser infra-rouge dont l'émetteur est orienté dans la même direction que ledit transducteur de réception (10), de sorte que ladite impulsion soit reçue par la caméra de reception infra-rouge.

8. Système selon la revendication 7, caractérisé par le fait que le transducteur de réception (10) et l'émetteur laser sont fixés sur un support (11) sensiblement vertical et mobile en rotation.

## Claims

1. Battlefield IFF identification method, characterised in that as soon as a vehicle is detected in a zone under surveillance by means of an infra-red camera, at least one encoded IFF interrogation is transmitted to this vehicle, and in that this vehicle, if it is a friendly vehicle, is made to transmit to the interrogator, as soon as it receives the interrogation, an infra-red laser pulse which is received by the said infra-red camera.

2. Method according to Claim 1, characterised in that the interrogator also transmits non-response codes to which no friendly vehicle must respond.

3. Method according to either one of Claims 1 or 2, characterised in that the interrogation is transmitted in X band.

4. Method according to either one of Claims 1 or 2, characterised in that the interrogation is transmitted in Ku band.

5. Method according to either one of Claims 1 or 2, characterised in that the interrogation is transmitted by a laser transmitter.

6. Method according to any one of Claims 1 to 4, characterised in that the interrogation signal is spectrally spread.

7. Battlefield IFF interrogation system, comprising an IFF interrogator (7) whose transmission transducer (8), which moves in rotation, is mechanically coupled to an infra-red receiving camera (4) connected to a display device (5), also comprising, on each friendly vehicle (3), a receiving transducer (10) cooperating with the said transmission transducer, characterised in that this receiving transducer is connected to an IFF receiver (12) whose IFF signals decoder output (13) is connected to a laser pulse trigger input (14) of an infra-red laser source whose transmitter is aimed in the same direction as the said receiving transducer (10), such that the said pulse is received by the infra-red receiving camera.

8. System according to Claim 7, characterised in that the receiving transducer (10) and the laser transmitter are fixed to a substantially vertical support (11) which moves in rotation.

## Patentansprüche

1. Schlachtfeld-IFF-Erkennungsverfahren, dadurch gekennzeichnet, daß sobald ein Fahrzeug in einer mit Hilfe einer Infrarot-Kamera überwachten Zone entdeckt wird, wenigstens eine verschlüsselte IFF-Abfrage zu diesem Fahrzeug gesendet wird und daß von diesem Fahrzeug, wenn es ein Freund-Fahrzeug ist, sobald es die Abfrage empfängt, ein Infrarot-Laserimpuls zu dem Abfrager gesendet wird, der von der Infrarot-Kamera empfangen wird.

2. Verfahren nach Anspruch 1, dadurch gekennzeichnet, daß der Abfrager auch Nicht-Antwort-Codes sendet, welche jedes abgefragte Freund-Fahrzeuge nicht beantworten muß.

3. Verfahren nach Anspruch 1 oder 2, dadurch gekennzeichnet, daß die Abfrage auf dem X-Band gesendet wird.

4. Verfahren nach Anspruch 1 oder 2, dadurch gekennzeichnet, daß die Abfrage auf dem Ku-Band gesendet wird.

5. Verfahren nach Anspruch 1 oder 2, dadurch gekennzeichnet, daß die Abfrage von einem Lasersender gesendet wird.

6. Verfahren nach Anspruch 1 bis 4, dadurch gekennzeichnet, daß das Abfragesignal über ein Frequenzspektrum ausgefächert ist.

7. Schlachtfeld-IFF-Abfragesystem, das einen IFF-Abfrager (7) aufweist, dessen rotationsbeweglicher Sende-Signalwandler (8) mechanisch mit einer mit einer Sichtanzeige (5) verbundenen Infrarot-Empfangskamera (4) gekoppelt ist, und das außerdem in jedem Freund-Fahrzeug (3) einen mit dem Sende-Signalwandler zusammenarbeitenden Empfangs-Signalwandler (10) aufweist, dadurch gekennzeichnet, daß dieser Empfangs-Signalwandler mit einem IFF-Empfänger (12) verbunden ist, dessen IFF-Signal-Decoderausgang (13) mit einem Laserimpulssignal-Triggereingang (14) einer Infrarot-Laserquelle verbunden ist, deren Sender in dieselbe Richtung wie der Empfangs-Signalwandler (10) ausgerichtet ist, so daß das Impulssignal von der Infrarot-Empfangskamera empfangen wird.

8. System nach Anspruch 7, dadurch gekennzeichnet, daß der Empfangs-Signalwandler (10) und der Lasersender an einem im wesentlichen vertikalen und rotationsbeweglichen Träger (11) befestigt sind.

EP 0 264 331 B1